Europäisches Patentamt

European Patent Office

Office européen des brevets

(19)

(11) Publication number: **0 095 389**
**B1**

(12) **EUROPEAN PATENT SPECIFICATION**

(45) Date of publication of patent specification: **11.05.88**

(21) Application number: **83303030.7**

(22) Date of filing: **25.05.83**

(51) Int. Cl.⁴: **H 04 L 11/16,** H 04 L 25/49, H 04 L 11/08

(54) **Data transmission system.**

(30) Priority: **25.05.82 JP 89251/82**

(43) Date of publication of application:
**30.11.83 Bulletin 83/48**

(45) Publication of the grant of the patent:
**11.05.88 Bulletin 88/19**

(84) Designated Contracting States:
**DE FR GB IT**

(56) References cited:
**US-A-4 063 220**

(73) Proprietor: **SHARP KABUSHIKI KAISHA**
**22-22 Nagaike-cho Abeno-ku**
**Osaka 545 (JP)**

(72) Inventor: **Ise, Masahiro**
**2187-A18-203 Mise-cho**
**Kashihara-shi Nara-ken (JP)**
Inventor: **Tanaka, Hidehiko**
**2613-1 Ichinomoto-cho**
**Tenri-shi Nara-ken (JP)**
Inventor: **Machino, Katsuyuki**
**31-101 Higashikidera-cho 1-chome**
**Nara-shi Nara-ken (JP)**
Inventor: **Matsubara, Toshiyuki**
**2613-1 Ichinomoto-cho**
**Tenri-shi Nara-ken (JP)**
Inventor: **Terasaka, Teiji**
**2613-1 Ichinomoto-cho**
**Tenri-shi Nara-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

This invention relates to a data transmission system wherein a plurality of transmitters are connected to a common communication channel in a multidrop manner.

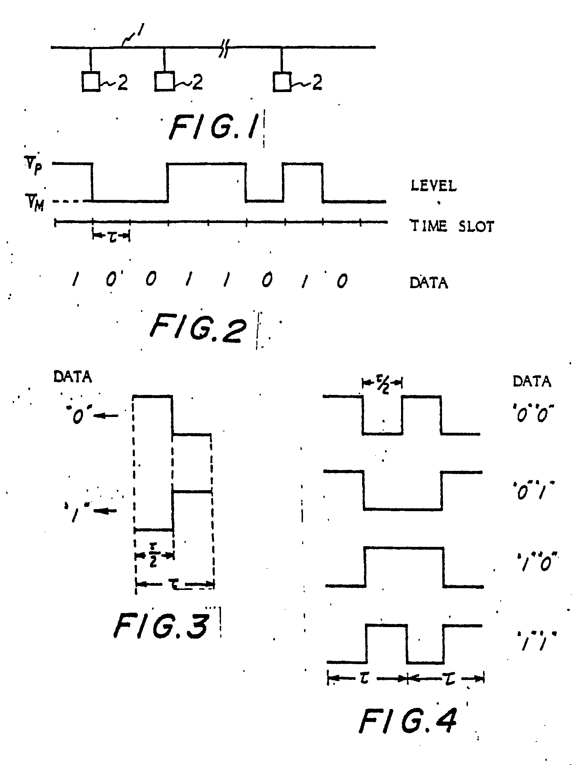

It is well known that signal transmission may be effected utilizing building or house wiring or cable for power distribution. A typical example of a multidrop connection scheme is illustrated in Fig. 1, which includes a power distribution cable 1 and a plurality of transmission modules 2 for transmission and reception of data. The most serious problem in this kind of system is that in the event that any one of the transmission modules 2 is faulty in a hardware aspect but signals representative of transmission data are supplied continuously to the cable 1 the system becomes disabled as a whole and fails to send signals. If a large number of modules are installed, it is very difficult to determine which module is faulty.

US—A—4063220 discloses a data communication system in which a number of transceivers, each forming part of a respective communication station are interconnected via a communication network, e.g. a coaxial cable. Each transceiver also includes a collision detector to determine whether or not, when signals are transmitted onto the network from that station, the network is already busy. The transmitter stage of the transceiver is disconnected from the communication network in the event that either one of two transistors through which data signals are coupled to the cable is ON for an excessive period. The data coupled on to the line may be in Manchester code format.

This known system, however does not include complete protection from a faulty station. Only when one of the transistors is ON for too long will disconnection take place, and there is no recognition of the possibility of failure being indicated by an excessively long transistor OFF period.

According to the present invention, there is provided a data transmission system comprising a plurality of data transmitters (2) having a common communication channel (1), each transmitter being arranged to transmit data in a coded format such that transitions between a plurality of signal levels occur at least once in every predetermined interval, each transmitter having means (22, 27, 28) for monitoring its transmission and for inhibiting such a transmission if, while the transmitter is transmitting the data signal remains at a said signal level for longer than a predetermined time, characterised in that said monitoring means (22, 27, 28) is arranged to monitor the periods that the data signal remains at each of said signal levels and to inhibit the transmission if any of said periods exceeds said predetermined time.

Thus, whatever the signal level may be when the transmitter fails to produce a signal transition, the failure is detected, and thus avoidance of adverse influence on the overall system by transmitter failure can be ensured.

In the disclosed system the coded format is the Manchester code, and data to be transmitted is converted into said Manchester code from a NRZ (Non Return to Zero) code. Also, the predetermined time is longer than the predetermined interval, which is the bit interval.

Some embodiments of the invention will now be described by way of example with reference to figures 2 to 11 of the accompanying drawings in which:—

Fig. 1 is a schematic view of a multidrop connection transmission system;

Fig. 2 is a time chart for explaining an example of an NRZ (Non Return to Zero) code notation;

Fig. 3 is a time chart showing a signal waveform of Manchester codes;

Fig. 4 is a time chart showing a typical signal waveform of respective combinations of Manchester codes;

Fig. 5 is a flow chart describing trouble-shooting in an embodiment of the present invention;

Fig. 6 is a time chart showing a typical level variation during signal transmission according to the embodiment of the present invention;

Fig. 7 is a block diagram of an embodiment of the present invention;

Fig. 8 is a detailed circuit diagram of a major portion in Fig. 7;

Fig. 9 is a time chart showing signal waveforms in the major portion as shown in Fig. 8;

Fig. 10 is a block diagram of another embodiment of the present invention; and

Fig. 11 is a block diagram showing details of a major portion in Fig. 10.

The simplest data format is a so-called NRZ (Non Return to Zero) in which the signal level corresponds to the data on a one-to-one basis. When data is transmitted in the NRZ notation, a voltage corresponding to the data is applied to a signal line at each predetermined time interval T as seen in Fig. 2. In the example of Fig. 2, a data "1" is defined by a voltage $V_p$ and a data "0" by a voltage $V_M$, but if the same data is transmitted continuously in the NRZ notation, the level remains constant and unchanged. This makes it very difficult to distinguish between correct data transmission and hardware failure in the system. The above problem can be overcome, provided that data are not represented by voltage levels on the one-to-one basis but by voltage level transitions.

The above precondition is satisfied by Manchester codes as depicted in Fig. 3, for example. According to the Manchester code notation, each bit time τ is divided into two half slots and a data "0" is defined by a combination of levels "1" and "0" in time sequence and a data "1" by a combination of levels "0" and "1" in time sequence (or vice versa). In normal operation there is never a signal portion lasting at the same level for more than τ seconds for possible four combinations of data, as will be understood from Fig. 4. Thus, if any signal lasts at the same level for more than τ seconds in the above code system, it can be assumed that a hardware fault has occurred somewhere in the system, as long as such erroneous signal is distinguished from a silence.

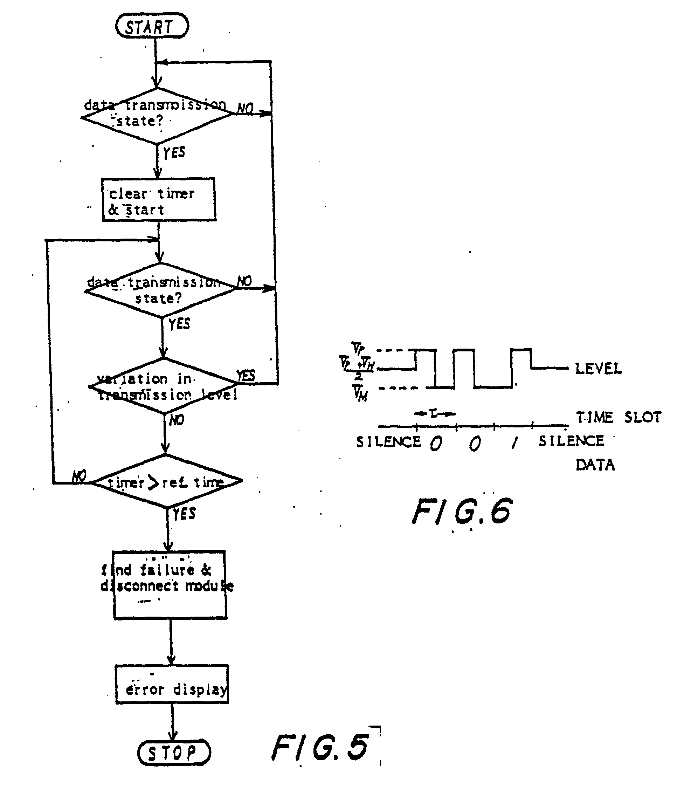

The code notation as defined above is adopted in transmission modules pursuant to the teachings of the present invention. Trouble-shooting procedures are described in a flow chart of Fig. 5. A reference time is selected to be longer than $\tau$ and preferably selected to be more than $2\tau$. If there is no variation in the level of the signal being transmitted for more than such reference time, then the remedy taken thereafter is to treat the subject transmission module as having a hardware problem, disconnect its level supplying section and indicate that the subject module is out of condition.

One way to determine whether the module is in the transmission state and to disconnect the level supplying section is discussed below. To facilitate detection of silence, levels other than $V_P$ and $V_M$ are used during a silence interval

$$\text{(typically, } \frac{V_P + V_M}{2} \text{)}.$$

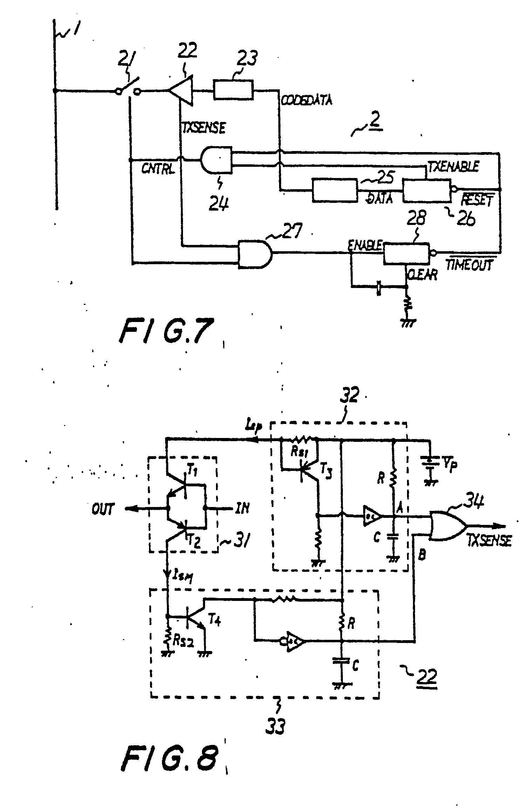

A typical example for implementing detection of abnormal transmission and forced disconnection is illustrated in Fig. 7.

In Fig. 7, there are shown a cable 1 for module-to-module signal transmission (also for power distribution), a disconnecting switch, 21 for disconnecting the transmission module or modules from the transmission cable during a silence interval and for forced interruption of transmission upon fault detection and an AND gate 24 for controlling the switch 21. A transmission output section is denoted by 22 and whether the output section 22 is in the transmission state is determined by a signal TXSENSE. A transmission level setting section 23 outputs levels corresponding to outputs from the preceding code converter 25. The code converter 25 is adapted to convert NRZ data into a suitable code notation (the Manchester code or the like as described above). A data generation and control section 26 on one hand feeds the NRZ data to the code converter 25 and on the other hand feeds a transmission/disconnection signal TXENABLE to the AND gate 24. Another AND gate 27 is to permit monitoring of the transmission level by the signal TXSENSE only while the switch 21 is ON. A timer 28 is adapted for measuring the time for which the signal remains at the same level, and more particularly is cleared at every level transition and continuous time counting while the transmission level remains unchanged.

When the reference time is reached by the timer, its output TIMEOUT becomes true so that the output of the AND gate 24 is false and the switch 21 is turned OFF to force transmission to stop. Since the data generation and control section 26 is usually implemented with a microcomputer or complicated hardware logic connection, this section more often causes a hardware trouble than the other sections in Fig. 7. In particular, when this is implemented with the microcomputer, it demands a special means to recover after a program sequence therein falls into disorder and the section gets out of control. To this end the signal $\overline{\text{TIMEOUT}}$ is applied as a $\overline{\text{RESET}}$ signal to the data generation and control section 26, with concurrent inhibition of level supply. Should the data control section return to its normal state with the signal $\overline{\text{RESET}}$, the system is ready to re-start transmission. Unless the data control section recovers its normal state, the subject module is disabled to supply the level and the system is disabled to transmit data to and from that module. However, there is never complete breakdown of the system.

A simple and reliable way to generate the signal TXSENSE is to derive a power source current from the final stage. For this reason the transmission output section 22 of Fig. 7 is of an emitter follower configuration as shown in Fig. 8 (when, $V_p>0$, $V_M=0$).

In Fig. 8, the transmission output section 22 includes an output stage emitter follower 31, a detector circuit 32 for deciding from current if a transistor $T_1$ is ON when $IN=V_P$, and a detector circuit 33 for deciding from current if a transistor $T_2$ is ON when $IN=0$. The signal TXSENSE is derived from an OR gate 34 responsive to the outputs of the two detector circuits 32 and 33. The detection levels may be optionally selected through the use of $R_{S1}$ and $R_{S2}$ with the resistances determined by the following definition.

$$I_{SP} \geq R_{S1} \cdot Vbe_P, \quad I_{SM} \geq R_{S2} Vbe_M \qquad (1)$$

$Vbe_p$=base-emitter voltage of $T_3\sim0.7V$
$Vbe_M$=base-emitter voltage of $T_4\sim0.7V$.

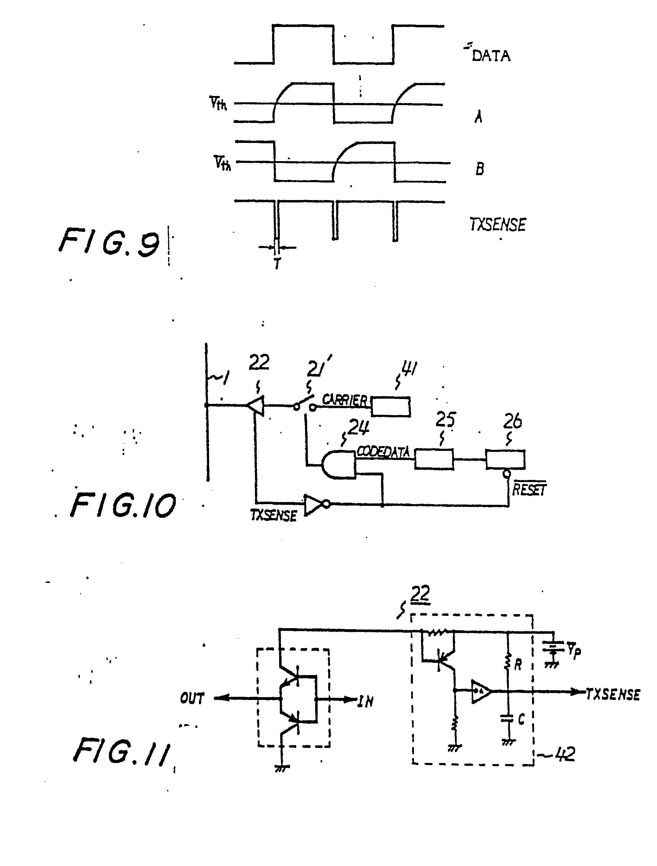

Various signals occurring in the circuit of Fig. 8 in operation are depicted in Fig. 9. The output of the circuit 32 is A and the output of the circuit 33 is B. Charging of a capacitor C via a resistor R starts when a transistor $T_3$ or $T_4$ in the detector circuits is turned ON and the output appears with a time delay T determined as a function of the CR time constant and the threshold voltage Vth of the OR gate 34 as follows:

$$T = -CRl_n(1 - \frac{Vth}{V_P}) \qquad (2)$$

The potential at the capacitor C drops to zero immediately after the transistor $Tr_3$ or $Tr_4$ is turned OFF. In the illustrated example, the timer 28 of Fig. 7 is made up by a CR integration circuit. Whenever the level of the signal under transmission changes, the signal TXSENSE never fail to fall to zero for the time T. This results in initializing the timer to zero and re-starting time measurement. As already described, if the signal TXSENSE lasts for more than the reference time, the signal TIMEOUT is developed to force the transmission state to a halt.

It is obvious that the present invention is equally applicable to transmission systems using a carrier. Another embodiment of the present invention using AM modulation is shown in Fig. 10, with simpler circuit than the previous embodiment of Fig. 7. The components 1, 22, 24—26 are similar to those in Fig. 7. A transmission/disconnection switch 21 also serves to determine whether to apply the carrier. A carrier oscillator is denoted by 41. Fig. 11 shows a circuit corresponding to that in Fig. 8, wherein a CR integration circuit 42 is equivalent to the timer 28 of Fig. 7. The CR time constant of the integration circuit 42 is selected within a range from T to 2τ. The circuit 33 in Fig. 8 is not necessary because of the need for only decision as to whether to apply the carrier.

**Claims**

1. A data transmission system comprising a plurality of data transmitters (2) having a common communication channel (1), each transmitter being arranged to transmit data in a coded format such that transition between a plurality of signal levels occur at least once in every predetermined interval, each transmitter having means (22, 27, 28) for monitoring its transmission and for inhibiting such a transmission if, while the transmitter is transmitting the data signal remains at a said signal level for longer than a predetermined time, characterised in that said monitoring means (22, 27, 28) is arranged to monitor the periods that the data signal remains at each of said signal levels and to inhibit the transmission if any of said periods exceeds said predetermined time.

2. A data transmission system according to claim 1 wherein the said signal levels comprise the two levels "1" and "0", the coded format being such that a data "1" is represented by a first sequence of two signal portions at signal levels "0" and "1" respectively, and a data "0" is represented by a second sequence, which is the reverse of the first, of said two signal portions.

3. A data transmission system according to claim 2 wherein said coded format is the Manchester code notation.

4. A data transmission system according to claim 3 characterized in that the data to be transmitted is converted into said Manchester code format from a NRZ (Non Return to Zero) code format.

5. A data transmission system according to any preceding claim wherein said predetermined time is longer than said predetermined interval.

6. A data transmission system according to any preceding claim, characterized in that said monitoring means (22, 27, 28) includes a timer (28) which is arranged to be cleared whenever a said transition occurs and to time-count each of said periods.

7. A data transmission system according to claim 6 characterized in that said monitoring means (22, 27, 28) also includes a generator means (22) for generating a transmission monitoring signal (TXSENSE) which is at a preset level whenever the data signal is at any of said signal levels except for interruptions which occur at each said transition, the timer being arranged to time the uninterruption portions of said transmission monitoring signal (TXSENSE).

8. A data transmission system according to claim 7 characterized in that said generator means includes first detector means (32) for generating a first detection signal (A) when the data signal is at a first said signal level, second detector means (33) for generating a second detection signal (B) when the data signal is at a second said signal level, and gate means (34) coupled to receive said first and second detection signals (A; B) and to generate the transmission monitoring signal therefrom.

9. A data transmission system according to claim 8 characterized in that each of said first and second detector means (32; 33) includes an RC network which damps the rise of the corresponding detection signal (A; B) upon transition of the data signal to the corresponding signal level, so that said interruptions are produced in accordance with an input threshold (Vth) of said gate means.

10. A data transmission system according to any preceding claim characterized in that said communication channel is a power distribution line.

**Patentansprüche**

1. Datenübertragungssystem mit einer Mehrzahl von Datenquellen (2) mit einem gemeinsamen Kommunikationskanal · (1), bei dem jede Quelle Daten in einem Codeformat so erzeugt, daß ein Übergang zwischen einer Mehrzahl von Signalpegeln mindestens einmal in jedem bestimmten Intervall auftritt und jede Quelle Vorrichtungen (22, 27, 28) zur Überwachung ihrere Aussendung und zur Sperrung der Aussendung in dem Fall aufweist, in dem die Quelle ein Datensignal erzeugt, das länger als eine bestimmte Zeit auf einem bestimmten Signalpegel bleibt, dadurch gekennzeichnet, daß die Überwachungsvorrichtungen (22, 27, 28) zur Überwachung der Perioden, in denen sich die Datensignale auf jeweils einem Signalpegel befinden und zur Verhinderung der Aussendung dienen, wenn irgendeine der Perioden eine bestimmte Zeitdauer überschreitet.

2. Datenübertragungssystem nach Anspruch 1, dadurch gekennzeichnet, daß die Signalpegel die zwei Pegel "1" und "0" umfassen, und daß das Codeformat so ausgelegt ist, daß "1"-Daten durch eine erste Folge von Signalteilen mit den Signalpegeln "0" bzw. "1" und "0"-Daten durch eine zweite Folge, die die Umkehrung der erste Folge ist, dargestellt werden.

3. Datenübertragungssystem nach Anspruch 2, dadurch gekennzeichnet, daß für das Codeformat die Manchester-Code-Notation verwendet wird.

4. Datenübertragungssystem nach Anspruch 3, dadurch gekennzeichnet, daß die zu übertragenden Daten aus einem NRZ (Non Return to Zero)-Codeformat in das Manchester-Codeformat umgesetzt werden.

5. Datenübertragungssystem nach einem der vorhergehenden Ansprüche, dadurch gekennzeichnet, daß die bestimmte Zeitdauer länger ist als das bestimmte Intervall.

6. Datenübertragungssystem nach einem der vorhergehenden Ansprüche, dadurch gekennzeichnet, daß die Überwachungsvorrichtungen (22, 27, 28) einen Zeitgeber (28) aufweisen, der die Zeitdauer jeder Periode zählt und rückgesetzt wird, wenn ein Übergang stattfindet.

7. Datenübertragungssystem nach Anspruch 6, dadurch gekennzeichnet, daß die Überwachungsvorrichtungen (22, 27, 28) zusätzlich einen Generator (22) zur Erzeugung eines Sende-Überwachungssignals (TXSENSE) aufweisen, das einen bestimmten Pegel hat, wenn sich das Datensignal auf irgendeinem Signalpegel mit Ausnahme der bei jedem Übergang auftretenden Unterbrechungen befindet, und der Zeitgeber die nicht unterbrochenen Teile des Sende-Überwachungssignals (TXSENSE) einstellt.

8. Datenübertragungssystem nach Anspruch 7, dadurch gekennzeichnet, daß der Generator erste Detektoren (32) zur Erzeugung eines ersten Detektionssignals (A), wenn das Datensignal einen ersten Signalpegel zeigt, und zweite Detektoren (33) zur Erzeugung eines zweiten Detektionssignals (B) aufweist, wenn das Datensignal einen zweiten Signalpegel zeigt, sowie Tore (34) für die ersten und zweiten Detektionssignale (A; B) und zur Erzeugung des Sende-Überwachungssignals daraus aufweist.

9. Datenübertragungssystem nach Anspruch 8, dadurch gekennzeichnet, daß die ersten und zweiten Detektoren (32; 33) ein RC-Netzwerk aufweisen, das den Anstieg der entsprechenden Detektionssignale (A; B) beim Übergang der Datensignale auf die entsprechenden Signalpegel dämpft, so daß die Unterbrechungen entsprechend dem Eingangsschwellenwert (Vth) der Tore erzeugt werden.

10. Datenübertragungssystem nach einem der vorhergehenden Ansprüche, dadurch gekennzeichnet, daß der Kommunikationskanal die Verteilungsleitung eines Stromnetzes ist.

**Revendications**

1. Système de transmission de données comprenant une pluralité d'émetteurs de données (2) ayant un canal de communication commun (1), chaque émetteur étant agencé pour émettre des données dans un format codé tel qu'il se produise une transition entre plusieurs niveaux de signal au moins une fois pendant chaque intervalle prédéterminé, chaque émetteur comprenant des moyens (22, 27, 28) de contrôle de son émission et d'inhibition d'une telle émission si, pendant que l'émetteur est en train d'émettre, le signal de données reste à l'un desdits niveaux de signal pendant une durée supérieure à une durée prédéterminée, caractérisé en ce que lesdits moyens de contrôle (22, 27, 28) sont agencés pour surveiller les périodes pendant lesquelles le signal de données reste à chacun desdits niveaux de signal et pour inhiber l'émission si une quelconque desdites périodes dépasse ladite durée prédéterminée.

2. Système de transmission de données selon la revendication 1, dans lequel lesdits niveaux de signal comprennent les deux niveaux "1" et "0", le format codé étant tel qu'une donnée "1" est représentée par une première séquence de deux portions de signal à des niveaux de signal "0" et "1" respectivement, et qu'une donnée "0" est représentée par une seconde séquence, laquelle est l'inverse de la première, des deux portions de signal.

3. Système de transmission de données selon la revendication 2, dans lequel le format codé est la notation du code Manchester.

4. Système de transmission de données selon la revendication 3, caractérisé en ce que les données à transmettre sont converties en format de codage Manchester à partir d'un format de codage NRZ (non retour à zéro).

5. Système de transmission de données selon l'une quelconque des revendications précédentes, dans lequel la durée prédéterminée est supérieure à l'intervalle prédéterminé.

6. Système de transmission de données selon l'une quelconque des revendications précédentes, caractérisé en ce que lesdits moyens de contrôle (22, 27, 28) comprennent un temporisateur (28) qui est remis à zéro à chaque fois qu'une transition se produit et qui compte al durée de chacune desdites périodes.

7. Système de transmission de données selon la revendication 6, caractérisé en ce que les moyens de contrôle (22, 27, 28) comprennent en outre des moyens de génération (22) destinés à générer un signal de contrôle de transmission (TXSENSE) qui est à un niveau préréglé, à chaque fois que le signal de données se trouve à l'une quelconque des niveaux de signal à l'exception des interruptions qui se produisent à chaque transition, le temporisateur étant agencé pour minuter les portions non-interrompues dudit signal de contrôle de transmission (TXSENSE).

8. Système de transmission de données selon la revendication 7, caractérisé en ce que les moyens de génération comprennent un premier moyen de détection (32) destiné à établir un premier signal de détection (A) lorsque le signal de données est à un premier niveau de signal, un second moyen de détection (33) destiné à établir un second signal de détection (B) lorsque le signal de données est à un second niveau de signal, et un moyen de déclenchement périodique (34) destiné à recevoir les premier et second signaux de détection (A; B) et à établir le signal de contrôle de transmission à partir de ceux-ci.

9. Système de transmission de données selon la revendication 8, caractérisé en ce que chacun des premier et second moyens de détection (32, 33) comprend un réseau RC qui amortit la montée du signal de détection correspondant (A; B) lors de la transition du signal de donnée au niveau de signal correspondant, pour que lesdites interruptions soient produites en fonction d'un seuil d'entrée (Vth) du moyen de déclenchement périodique.

10. Système de transmission de données selon l'une quelconque des revendications précédentes, caractérisé en ce que ladite voie de communication est une ligne de distribution d'énergie.

FIG.1

FIG.2

FIG.3

FIG.4

FIG.6

FIG.5

FIG.7

FIG.8

FIG.9

FIG.10

FIG.11